# EUROPÄISCHE PATENTSCHRIFT

(11) **EP 2 033 375 B1**
(45) Veröffentlichungstag und Bekanntmachung des Hinweises auf die Patenterteilung: **20.03.2013**
(21) Anmeldenummer: 07765430.9
(22) Anmeldetag: 14.06.2007
(51) Int. Cl.: H04L 12/403

(54) **VERFAHREN ZUM ÜBERTRAGEN VON MESSDATEN UND SENSOREINRICHTUNG**
METHOD FOR TRANSMITTING MEASURED DATA, AND SENSOR DEVICE
PROCÉDÉ POUR LA TRANSMISSION DE DONNÉES DE MESURE ET DISPOSITIF DE CAPTEUR

(30) Priorität: 14.06.2006 DE 102006027997; 14.06.2007 DE 102007028002
(43) Veröffentlichungstag der Anmeldung: 11.03.2009
(73) Patentinhaber: Continental Teves AG & Co. OHG, 60488 Frankfurt (DE)
(72) Erfinder: KITZ, Rainer, 61130 Nidderau (DE); UCAK, Murat, 60320 Frankfurt Am Main (DE)
(86) Internationale Anmeldenummer: PCT/EP2007/055918
(87) Internationale Veröffentlichungsnummer: WO 2007/144412

(56) Entgegenhaltungen:
- EP-A- 1 667 376
- WO-A-2004/101326
- GB-A- 2 418 113
- US-A1- 2002 103 592

## Beschreibung

### Technisches Gebiet

Die Erfindung betrifft ein Verfahren zum Übertragen von Messdaten von einer Sensoreinrichtung an eine Steuerungseinrichtung.

### Hintergrund der Erfindung

Steuer- und Regelfunktionen werden in Kraftfahrzeugen üblicherweise in Steuerungseinrichtungen ausgeführt, welche die erforderlichen Messdaten von einer oder mehreren Sensoreinrichtungen erhalten, die örtlich getrennt von der Steuerungseinrichtung in dem Kraftfahrzeug angeordnet sind. Die Übertragung der Messdaten erfolgt dabei üblicherweise über einen Datenbus, wie beispielsweise den in Kraftfahrzeugen üblicherweise eingesetzten CAN-Bus (CAN: Controller Area Network).

Zur Ausführung der Steuer- und Regelfunktionen werden entsprechende Algorithmen in den Steuerungseinrichtungen ausgeführt, die schleifenweise in so genannten Loops durchlaufen werden. Insbesondere, wenn es sich bei den Steuer- und Regelfunktionen um sicherheitskritische Echtzeitanwendungen, wie beispielsweise Fahrdynamikregelungen oder adaptive Geschwindigkeitsregelungen (ACC für Adaptive Cruise Control), handelt, ist es erforderlich, dass die Messdaten den Steuerungseinrichtungen so zugeführt werden, dass die zu Beginn eines Loops vorliegenden Messdaten möglichst aktuell sind, d.h. dass ein möglichst geringer Zeitverzug zwischen der Messung und dem Einlesen der Messdaten in der Steuerungseinrichtung besteht, der im Folgenden als Latenzzeit bezeichnet wird.

Dokument EP 1 667 376 offenbart ein Netzwerk das ein Clocksignal benutzt, um Daten im synchroner Weise auszulesen oder eben bei nicht Anliegen des Clocksignals Daten asynchron zu übertragen.

### Darstellung der Erfindung

Es ist eine Aufgabe der vorliegenden Erfindung, die Messdaten mit einer möglichst geringen Latenzzeit über einen Datenbus von einer Sensoreinrichtung an eine Steuerungseinrichtung zu übertragen.

Die Aufgabe wird gelöst durch ein Verfahren mit den Merkmalen des Patentanspruchs 1.

Die Erfindung beinhaltet die Idee, dass die Steuerungseinrichtung und die Sensoreinrichtung anhand von Synchronisierungsbotschaften, die von der Steuerungseinrichtung gesendet werden, aufeinander synchronisiert werden. Die synchron zum Empfang der Synchronisierungsbotschaften gesendeten Datennachrichten werden mit einem festen zeitlichen Abstand zu dem Empfang der Synchronisierungsbotschaften gesendet.

Insbesondere kann eine Datennachricht im Wesentlichen unmittelbar nach dem Empfang einer Synchronisierungsbotschaft gesendet werden.

Die Synchronisierungsbotschaften können von der Steuerungseinrichtung beispielsweise unter Berücksichtigung der Übertragungszeiten des Datenbusses so an die Sensoreinrichtung gesendet werden, dass die als Antwort auf die Synchronisierungsbotschaften gesendeten Datennachrichten vor dem Beginn eines Loops in der Steuerungseinrichtung empfangen werden.

Bekanntermaßen können bei der Übertragung von Daten über einen Datenbus, insbesondere bei einer Datenübertragung über den seriellen CAN-Bus, Verzögerungen auftreten. Dies kann insbesondere dann der Fall sein, wenn ein hohes Datenaufkommen vorliegt bzw. eine Vielzahl von Stationen Daten zu senden hat. Dabei kann es auch zu Verzögerungen bei der Übertragung der Synchronisierungsbotschaften kommen, so dass eine Synchronisierung von Sensoreinrichtung und Steuerungseinrichtung unter Umständen nicht möglich ist.

Daher ist in einer Ausführungsform des Verfahrens und der Sensoreinrichtung vorgesehen, dass geprüft wird, wann, insbesondere in welchen Zeitabständen, von der Steuerungseinrichtung gesendete Synchronisierungsbotschaften in der Sensoreinrichtung empfangen werden, und die Sensoreinrichtung in den Synchronmodus versetzt wird, wenn die Überprüfung ergibt, dass von der Steuerungseinrichtung gesendete Synchronisierungsbotschaften entsprechend eines ersten zeitlichen Musters empfangen werden.

Der Vorteil dieser Ausführungsform besteht darin, dass die Datennachrichten nur dann im Synchronmodus übertragen werden, wenn die Synchronisierungsbotschaften entsprechend einem vorgegebenen ersten zeitlichen Musters empfangen werden. Anhand des zeitlichen Musters wird vorzugsweise erkannt, dass höchstens geringe Verzögerungen bei der Übertragung der Synchronisierungsbotschaften auftreten, so dass eine Synchronisierung von Sensor- und Steuerungseinrichtung anhand der Synchronisierungsbotschaften vorgenommen werden kann und sinnvoll ist.

Eine Ausgestaltung des Verfahrens und der Sensoreinrichtung zeichnet sich zudem dadurch aus, dass das erste zeitliche Muster eine Mindestanzahl von aufeinanderfolgenden Synchronisierungsbotschaften umfasst, welche in Zeitabständen empfangen werden, die jeweils innerhalb eines vorgegebenen ersten Bereichs liegen.

Es hat sich gezeigt, dass anhand eines derartigen zeitlichen Musters zuverlässig festgestellt werden kann, dass höchstens geringe Verzögerungen bei der Übermittlung der Synchronisierungsnachrichten auftreten und eine Synchronisierung zwischen der Sensoreinrichtung und der Steuerungseinrichtung anhand der Synchronisierungsbotschaften vorgenommen werden kann.

Weiterhin sieht eine Ausführungsform des Verfahrens und der Sensoreinrichtung vor, dass die Sensoreinrichtung in einen Asynchronmodus versetzt wird, wenn die Prüfung ergibt, dass die Synchronisierungsbotschaften nicht entsprechend des ersten zeitlichen Musters in der Sensoreinrichtung empfangen werden, wobei die Sensoreinrichtung im Asynchronmodus die Messdaten umfassende Datennachrichten mit einer vorgegebenen Frequenz an die Steuerungseinrichtung sendet.

Um Messdaten auch dann an die Steuerungseinrichtung übertragen zu können, wenn eine Synchronisierung nicht möglich ist, ist in dieser Ausführungsform vorteilhaft ein Asynchronmodus für die Übertragung der Messdaten vorgesehen. Dass eine Synchronisierung nicht möglich ist, wird dabei festgestellt, wenn das erste zeitliche Muster nicht eingehalten wird. In dem Asynchronmodus werden die Datennachrichten vorteilhaft mit einer vorgegebenen Frequenz, d.h. unabhängig von dem Empfang von Synchronisierungsbotschaften, an die Steuerungseinrichtung übermittelt.

Unter dem Begriff Frequenz wird dabei die Häufigkeit verstanden, mit der Datennachrichten in einem bestimmten Zeitintervall von der Sensoreinrichtung abgesendet werden, d.h. die Wiederholrate, mit der die Datennachrichten von der Sensoreinrichtung gesendet werden.

Darüber hinaus beinhaltet eine Weiterbildung des Verfahrens und der Sensoreinrichtung, dass die Sensoreinrichtung in einen ersten Asynchronmodus versetzt wird, wenn die Prüfung ergibt, dass die von der Steuerungseinrichtung gesendeten Synchronisierungsbotschaften entsprechend eines zweiten zeitlichen Musters in der Sensoreinrichtung empfangen werden, wobei die Messdaten umfassende Datennachrichten in dem ersten Asynchronmodus mit einer ersten Frequenz an die Steuerungseinrichtung gesendet werden.

Eine verbundene Ausführungsform des Verfahrens und der Sensoreinrichtung ist dadurch gekennzeichnet, dass das zweite zeitliche Muster eine Mindestanzahl von aufeinanderfolgenden Synchronisierungsbotschaften umfasst, welche in Zeitabständen empfangen werden, die jeweils innerhalb eines vorgegebenen zweiten Bereichs liegen, wobei der zweite Bereich kleinere Zeitabstände umfasst als der erste Bereich.

Vorteilhaft wird der erste Asynchronmodus in dieser Ausgestaltung aktiviert, wenn die Synchronisierungsbotschaften in relativ kleinen Zeitabständen empfangen werden empfangen werden. Bei kleinen Zeitabständen zwischen den Synchronisierungsbotschaften ist von einem geringen Datenaufkommen innerhalb des Datenbusses auszugehen, so dass die erste Frequenz entsprechend hoch gewählt werden kann, ohne den Datenbus zu sehr zu belasten. Der zweite Bereich kann insbesondere alle Zeitabstände umfassen, die kleiner sind, als die Untergrenze des ersten Bereichs.

Ferner zeichnet sich eine Ausgestaltung des Verfahrens und der Sensoreinrichtung dadurch aus, dass die Sensoreinrichtung in einen zweiten Asynchronmodus versetzt wird, wenn die Prüfung ergibt, dass die Synchronisierungsbotschaften nicht entsprechend eines vorgegebenen zeitlichen Musters in der Sensoreinrichtung empfangen werden, wobei die Messdaten umfassende Datennachrichten in dem zweiten Asynchronmodus mit einer zweiten Frequenz an die Steuerungseinrichtung gesendet werden.

In dieser Ausgestaltung wird der zweite Asynchronmodus vorteilhaft aktiviert, wenn die Synchronisierungsbotschaften nicht entsprechend einem vorgegebenen zeitlichen Muster, insbesondere nicht entsprechend dem ersten oder zweiten vorgegebenen Muster, in der Sensoreinrichtung empfangen werden. Mit Vorteil werden die Datennachrichten in diesem Fall periodisch mit einer zweiten Frequenz an die Steuerungseinrichtung übermittelt. Die zweite Frequenz ist vorzugsweise kleiner als die erste Frequenz, da von Verzögerungen bei der Übermittlung der Synchronisierungsbotschaften auszugehen ist, wenn diese keines der vorgegebenen zeitlichen Muster einhalten. Solche Verzögerungen können bei einem hohen Datenaufkommen entstehen, so dass eine kleinere Frequenz gewählt wird, um den Datenbus nicht zu überlasten.

Weiterhin ist es bei einer Ausgestaltung des Verfahrens und der Sensoreinrichtung vorgesehen, dass für die Prüfung, wann, insbesondere in welchen Zeitabständen, die von der Steuerungseinrichtung gesendeten Synchronisierungsbotschaften in der Sensoreinrichtung empfangen werden, ein Zeitfenster vorgegeben wird.

Der Vorteil dieser Ausgestaltung liegt insbesondere darin, dass der zweite Asynchronmodus erst dann aktiviert wird, wenn innerhalb des Zeitfensters nicht festgestellt wird, dass die Synchronisierungsbotschaften entsprechend einem vorgegebenen zeitlichen Muster empfangen werden.

Eine verbundene Ausgestaltung des Verfahrens und der Sensoreinrichtung ist dadurch gekennzeichnet, dass das Zeitfenster bei jedem Empfang einer Synchronisierungsbotschaft in der Sensoreinrichtung neu initialisiert wird, wenn sich die Sensoreinrichtung im Synchronmodus-oder Asynchronmodus befindet.

Vorzugsweise bleiben einzelne Modi solange aktiv, bis die Bedingungen für die Aktivierung eines weiteren Modus erfüllt sind. In diesem Zusammenhang stellt die zuvor genannte Ausgestaltung sicher, dass ein Modus, insbesondere der Synchronmodus, auch dann aktiviert bleibt, wenn das vorgegebene zeitliche Muster nur kurzzeitig - innerhalb des Zeitfensters - durchbrochen wird. Damit wird insbesondere der Synchronmodus robust gegenüber kurzzeitigen Abweichungen von dem ersten zeitlichen Muster gestaltet. Analog gilt dies auch für den ersten Asynchronmodus.

Ferner zeichnet sich eine Ausführungsform des Verfahrens und der Sensoreinrichtung dadurch aus, dass die Prüfung, wann, insbesondere in welchen Zeitabständen, von der Steuerungseinrichtung gesendete Synchronisierungsbotschaften in der Sensoreinrichtung empfangen werden, anhand eines Zeitstempelmessverfahrens erfolgt.

Mittels eines Zeitstempelmessverfahrens kann besonders zuverlässig ermittelt werden, in welchen zeitlichen Abständen die Synchronisierungsbotschaften in der Sensoreinrichtung empfangen werden.

Eine weitere Ausgestaltung des Verfahrens und der Sensoreinrichtung beinhaltet, dass die Sensoreinrichtung und die Steuerungseinrichtung über einen Datenbus miteinander verbunden sind.

Bei dem Datenbus handelt es sich insbesondere um einen Datenbus eines Kraftfahrzeugs, beispielsweise einen CAN-Bus.

Die Erfindung und ihre Ausführungsformen ermöglichen eine robuste Synchronisierung zwischen einer Sensoreinrichtung und einer Steuerungseinrichtung, die insbesondere im Hinblick auf in dem Steuergerät ausgeführte sicherheitskritische Echtzeitanwendungen besonders vorteilhaft ist. Eine derartige sicherheitskritische Echtzeitanwendung ist insbesondere eine Fahrdynamikregelung, bei der gemessene Fahrzustandsdaten, wie beispielsweise Linearbeschleunigungen des Fahrzeugs oder Drehraten des Fahrzeugs bezüglich einer oder mehrerer seiner Achsen, ausgewertet werden, um kritische Fahrzustände zu erkennen und das Fahrzeug durch Steuer- und/oder Regeleingriffe zu stabilisieren.

Dabei ist es in einer weiteren Ausführungsform des Verfahrens und der Sensoreinrichtung vorgesehen, dass es sich bei der Sensoreinrichtung um ein Sensorcluster in einem Kraftfahrzeug handelt, das wenigstens einen Längsbeschleunigungssensor, insbesondere einen Querbeschleunigungssensor, und/oder wenigstens einen Drehratensensor, insbesondere einen Gierratensensor, aufweist.

In einem Sensorcluster sind üblicherweise die Sensoren, die zur Messung der Linearbeschleunigungen und Drehraten eines Fahrzeugs verwendet werden, in einem Gehäuse integriert. In der Regel enthält das Sensorcluster zudem eine Prozessoreinheit, welche eine erste Aufbereitung der Messdaten vornimmt und die an die Steuerungseinrichtung zu sendenden Datennachrichten erzeugt. Das Sensorcluster wird direkt im Fahrzeug montiert und sein Aufbau stellt eine vibrationsgedämpfte Unterbringung der Sensormodule sicher und sorgt für eine optimale Abschirmung auch gegen starke elektromagnetische Felder. Zur Durchführung einer Fahrdynamikregelung umfasst das Sensorcluster in der Regel zumindest einen Querbeschleunigungssensor und einen Gierratensensor sowie vorzugsweise auch einen Längsbeschleunigungssensor.

Eine weitere Ausführungsform des Verfahrens und der Sensoreinrichtung ist dadurch gekennzeichnet, dass es sich bei der Steuerungseinrichtung um eine Steuerungseinrichtung eines Kraftfahrzeugs zur Durchführung einer Fahrdynamikregelung handelt.

Darüber hinaus wird ein Computerprogrammprodukt bereitgestellt, das Softwarecodeabschnitte umfasst, mit denen ein Verfahren nach einem der vorangegangenen Schritte ausführbar ist, wenn die Softwarecodeabschnitte auf einem Prozessor ausgeführt werden.

Die genannten und weitere Vorteile, Besonderheiten und zweckmäßige Ausgestaltungen der Erfindungen ergeben sich auch aus den Ausführungsbeispielen der Erfindung, die im Folgenden unter Bezugnahme auf die Figuren beschrieben werden.

### Kurze Beschreibung der Figuren

Von den Figuren zeigt:
- Fig. 1: eine schematische Darstellung mit einer Sensoreinrichtung, die über einen Datenbus mit einer Steuerungseinrichtung verbunden ist,
- Fig. 2: ein Diagramm, in dem beispielhaft eine Datenübertragung in einem Synchronmodus veranschaulicht ist.
- Fig. 3: ein Diagramm, in dem ein erstes Beispiel mit einer Datenübertragung in einem zweiten Asynchronmodus veranschaulicht ist,
- Fig. 4: ein Diagramm, in dem ein zweites Beispiel mit einer Datenübertragung in dem zweiten Asynchronmodus veranschaulicht ist,
- Fig. 5: ein Diagramm, in dem ein drittes Beispiel mit einer Datenübertragung in dem zweiten Asynchronmodus veranschaulicht ist und
- Fig. 6: ein Diagramm, in dem beispielhaft eine Datenübertragung in einem ersten Asynchronmodus veranschaulicht ist.

### Ausführliche Darstellung von Ausführungsbeispielen

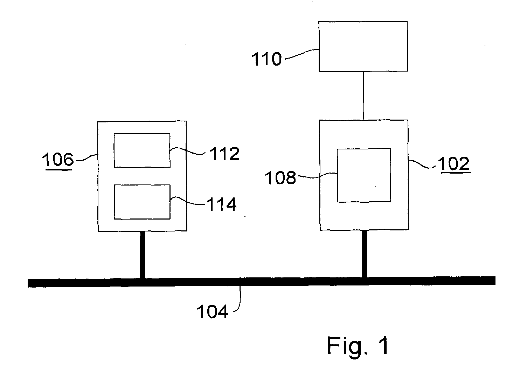

Figur 1 zeigt in schematischer Darstellung eine Steuerungseinrichtung (ECU) 102 eines Kraftfahrzeugs, die über einen Datenbus 104 mit einer Sensoreinrichtung 106 des Kraftfahrzeugs verbunden ist. Bei dem Datenbus 104 handelt es sich in einer Ausführungsform um einen dem Fachmann grundsätzlich bekannten CAN-Bus. Die Steuerungseinrichtung 102 verfügt über eine Prozessoreinheit 108 zur Durchführung eines Steuer- und/oder Regelalgorithmus, die beispielsweise in einem Softwareprogramm realisiert ist. Der Steuer- oder Regelalgorithmus erzeugt Steuerbefehle zur Ansteuerung wenigstens eines Aktors 110, der in den Betriebszustand des Kraftfahrzeugs eingreift. In der beispielhaft in Figur 1 dargestellten Ausgestaltung ist die Steuerungseinrichtung 102 über eine Datenleitung direkt mit dem Aktor 110 verbunden, über welche die Steuersignale an den Aktor 110 übermittelt werden. Gleichfalls kann es jedoch vorgesehen sein, dass das Steuergerät über den Datenbus 104 mit dem Aktor 110 verbunden ist. Ferner kann es auch vorgesehen sein, dass die Steuerungseinrichtung 102 über den Datenbus 104 und/oder über Datenleitungen mit mehreren Aktoren verbunden ist, die zur Realisierung der Funktionen des Softwareprogramms genutzt werden.

Die Sensoreinrichtung 106 umfasst in einer Ausführungsform wenigstens einen Sensor 112 zur Erfassung einer Fahrzustandsgröße oder einer Betriebsgröße des Kraftfahrzeugs. Gleichfalls kann es jedoch auch vorgesehen sein, dass die Sensoreinrichtung 106 beispielsweise einen Umfeldsensor zu Erfassung von in einem Umfeld des Fahrzeugs befindlichen Objekten umfasst. Die von dem Sensor 112 erfassten Messdaten werden von einer Prozessoreinheit 114 eingelesen und aufbereitet, bevor sie an die Steuerungseinrichtung 102 gesendet werden. Die Übertragung der Messdaten erfolgt anhand von Botschaften, die in dem Fachmann bekannter Weise über den Datenbus 104 an die Steuerungseinrichtung 102 gesendet werden. Die Botschaften werden gleichfalls von der Prozessoreinheit 114 der Sensoreinrichtung 106 generiert.

In der Steuerungseinrichtung 102 werden die Messdaten zyklisch innerhalb des ausgeführten Steuer- und/oder Regelalgorithmus verarbeitet. Die Dauer eines Rechenzyklus wird im Folgenden auch als Loopzeit bezeichnet und beträgt beispielsweise im Falle einer Fahrdynamikregelung üblicherweise etwa 10ms. Gleichfalls können Rechenzyklen auch unterbrochen werden, wenn beispielsweise Eintrittsbedingungen in eine Steuerung und/oder Regelung nicht erfüllt sind, so dass der eigentliche Steuer- und/oder Regelalgorithmus nicht ausgeführt zu werden braucht, sondern lediglich der Teil des Algorithmus, in dem geprüft wird, ob ein Eintritt in die Steuerung- und/oder Regelung erforderlich ist. Die Unterbrechung der Rechenzyklen entspricht effektiv einer Reduzierung der Loopzeit. Um dem Steuer- und/oder Regelalgorithmus die Messdaten mit einer möglichst geringen Latenzzeit zuzuführen, wird angestrebt, die Übertragung der Messdaten von der Sensoreinrichtung 106 an die Steuerungseinrichtung 102 mit den Rechenzyklen des Algorithmus zu synchronisieren. Eine Synchronisierung ist dabei besonders wichtig, wenn die eigentliche Steuerung- und/oder Regelung aktiv ist, d.h., wenn Steuer- und/oder Regeleingriffe mittels des Aktors 110 vorgenommen werden. Um eine Synchronisierung zu ermöglichen, sendet die Steuerungseinrichtung 102 Synchronisierungsbotschaften über den Datenbus 104 an die Sensoreinrichtung 106, die bei fehlerfreiem Empfang von der Sensoreinrichtung 106 mit Messdaten beinhaltenden Datennachrichten beantwortet werden. Dabei werden die Zeitpunkte, in denen die Synchronisierungsbotschaften von der Steuerungseinrichtung 102 abgesendet werden unter Berücksichtigung der in dem Datenbus 104 bestehenden Übertragungszeiten so gewählt, dass die von der Sensoreinrichtung 106 gesendeten Datennachrichten jeweils vor Beginn eines Rechenzyklus der Steuerungseinrichtung 102 empfangen werden. Hierdurch wird eine größtmögliche Aktualität der verarbeiteten Messdaten erreicht.

Zum Absenden der die Messdaten enthaltenen Datennachrichten sind in der Sensoreinrichtung 106 drei Betriebsmodi vorgesehen, die im Folgenden auch als Direktiven bezeichnet werden. Die Auswahl der Direktiven erfolgt durch eine Auswertung der zeitlichen Abfolge, in der die Synchronisierungsbotschaften empfangen werden. Diese Auswertung wird fortlaufend vorgenommen, während sich die Sensoreinrichtung 106 in Betrieb befindet, so dass während des Betriebs auch ein Wechsel zwischen den Direktiven erfolgen kann. Zur Bestimmung der zeitlichen Abstände, die zwischen dem Empfang der Synchronisierungsbotschaften liegen, werden die Synchronisierungsbotschaften innerhalb der Sensoreinrichtung 106 von der Prozessoreinheit 114 mittels eines Zeitstempelmessverfahrens verarbeitet.

Die Direktive 1 wird initialisiert, wenn eine vorgegebene Mindestzahl aufeinanderfolgender Synchronisierungsbotschaften empfangen wird, deren Zeitabstände innerhalb eines vorgegebenen ersten Bereichs liegen. Als Mindestzahl sind dabei beispielsweise zwischen drei und sechs, vorzugsweise vier Synchronisierungsbotschaften vorgegeben, und der erste Bereich umfasst beispielsweise Zeitabstände zwischen 2 ms und 30 ms, vorzugsweise zwischen 4 ms und 25 ms. Somit wird die Direktive 1 vorzugsweise beim Empfang der vierten Synchronisierungsbotschaft initialisiert, sofern die Zeitabstände zwischen den Synchronisierungsbotschaften zwischen 4 ms und 25 ms liegen. In der Direktive 1 befindet sich die Sensoreinrichtung 106 in einem synchronen Betriebsmodus und antwortet synchron auf die Synchronisierungsbotschaften 208 der Steuerungseinrichtung 102. Dabei werden die Datennachrichten im Wesentlichen unmittelbar nach dem Empfang der Synchronisierungsbotschaften gesendet, wobei sich ein geringer Zeitverzug durch die Verarbeitungszeit der Sensoreinrichtung 106 bzw. der Prozessoreinheit 114 ergibt.

Wenn eine Mindestanzahl von aufeinanderfolgenden Synchronisierungsbotschaften und die Zeitabstände zwischen diesen Synchronisierungsbotschaften kleiner als die Untergrenze des ersten Bereichs sind, dann wird die Direktive 3 initialisiert. Die Mindestanzahl entspricht dabei vorzugsweise der im Zusammenhang mit der Direktive 1 vorgegebenen Mindestanzahl von Synchronisierungsbotschaften. Somit wird die Direktive 3 initialisiert, wenn die vierte Synchronisierungsbotschaft empfangen worden ist und die Zeitabstände zwischen den Synchronisierungsbotschaften kleiner als 4 ms sind. In der Direktive 3 werden die Datennachrichten in einem Asynchronmodus an die Steuerungseinrichtung 102 übermittelt. Insbesondere ist es vorgesehen, dass die Datennachrichten mit einer festen Frequenz an die Steuerungseinrichtung 102 gesendet werden. Die feste Frequenz liegt beispielsweise zwischen 1/3 ms⁻¹ und 1/8 ms⁻¹, vorzugsweise bei 1/5 ms⁻¹.

Wenn innerhalb eines Zeitfensters einer vorgegebenen Zeitdauer weder die Direktive 1 noch die Direktive 3 initialisiert werden kann, dann wird die Direktive 2 initialisiert. Die vorgegebene Zeitdauer liegt beispielsweise zwischen 80 ms und 200 ms, vorzugsweise bei 120 ms. In der Direktive 2 befindet sich die Sensoreinrichtung 106 in einem asynchronen Betriebsmodus (AM) und sendet Datennachrichten mit einer vorgegebenen Frequenz 1/T_D2 an die Steuerungseinrichtung 102. Die Frequenz 1/T_D2 liegt beispielsweise zwischen 1/10 ms⁻¹ und 1/30 ms⁻¹, vorzugsweise bei 1/20 ms⁻¹. Das Zeitfenster wird vorzugsweise erstmalig initialisiert, nachdem die Zündung des Fahrzeugs eingeschaltet und der Datenbus 104 vollständig initialisiert worden ist. Solange die Sensoreinrichtung 106 in der Direktive 2 betrieben wird, wird das Zeitfenster nach dem Ablauf der vorgegebenen Zeitdauer neu initialisiert. Wenn die Direktive 1 oder die Direktive 3 initialisiert ist, dann erfolgt eine Neuinitialisierung des Zeitfensters bei jedem Eingang einer Synchronisierungsbotschaft.

Wenn eine Direktive initialisiert worden ist, dann erfolgt ein Übergang zu einer anderen Direktive, wenn die Bedingungen zu deren Initialisierung erfüllt sind. Da das Zeitfenster im Rahmen der Direktiven bei jedem Eingang einer Synchronisierungsbotschaft erneut initialisiert wird, bleiben die Direktiven auch dann initialisiert, wenn innerhalb des Zeitfensters keine Synchronisierungsbotschaften in der Sensoreinrichtung 106 empfangen werden, bzw. Synchronisierungsbotschaften nicht fehlerfrei empfangen werden. Wenn beispielsweise die Synchronisierungsbotschaften bei initialisierter Direktive 1 in Zeitabständen von 10 ms empfangen werden und ein Zeitfenster von 120 ms vorgegeben ist, so bleibt die Direktive 1 auch bei einem Wegfall von bis zu 11 Synchronisierungsbotschaften initialisiert. Hierdurch ist die Kommunikation zwischen der Sensoreinrichtung 106 und der Steuerungseinrichtung 102 robust gegenüber Fehlern bei der Übertragung der Synchronisierungsbotschaften.

Die zuvor genannten Bedingungen für die Initialisierung der Direktive 2 können beispielsweise eintreten, wenn die Übertragungszeiten für die Synchronisierungsbotschaften aufgrund eines hohen Datenaufkommens innerhalb des Datenbusses 104 variieren, was auch als Jitter bezeichnet wird. Daher wird die Frequenz, mit der Datennachrichten in der Direktive 2 an die Steuerungseinrichtung 102 gesendet werden, so bemessen, dass sie einerseits ausreichend hoch ist, um Messdaten mit einer ausreichenden Aktualität bereitzustellen, und andererseits das Datenaufkommen auf dem Datenbus 104 nicht zu sehr erhöht wird. Die Bedingungen für die Initialisierung der Direktive 3 können eintreten, wenn aufgrund vorheriger Verzögerungen bei der Datenübertragung aufeinanderfolgende Synchronisierungsbotschaften zunächst "aufgestaut" werden und dann sehr rasch hintereinander in der Sensoreinrichtung 106 empfangen werden oder wenn die Rechenzyklen in der Steuerungseinrichtung 102, wie zuvor beschrieben, abgebrochen werden, so dass sich effektiv eine kürzere Loopzeit ergibt. In derartigen Situationen ist es zweckmäßig, die Datennachrichten mit einer relativ hohen Frequenz an die Steuerungseinrichtung 102 zu senden, da aufgrund der hohen Empfangsrate von einem geringen Datenaufkommen in dem Datenbus 104 auszugehen ist und durch eine Frequenz der Datennachrichten sichergestellt werden kann, dass auch ohne eine Synchronisierung zwischen der Sensoreinrichtung 106 und der Steuerungseinrichtung 102 stets ausreichend aktuelle Messdaten zu Beginn eines Rechenzyklus der Steuerungseinrichtung 102 vorliegen. Eine Synchronisierung zwischen der Sensoreinrichtung 106 und der Steuerungseinrichtung 102 ist bei einer erheblichen Verkürzung der Loopzeit nicht unbedingt erforderlich, und wird insbesondere deswegen nicht durchgeführt, um den Datenbus 104 nicht durch eine sehr hohe Zahl von Datennachrichten, die mit einer sehr hohen Frequenz abgesendet werden, zu überlasten.

Um zu signalisieren, ob die Datenübertragung in dem Synchronmodus, d.h. in der Direktive 1, oder in einem Asynchronmodus, d.h. in der Direktive 2 oder 3, erfolgt, wird in der Sensoreinrichtung 106 ein Übertragungsstatus generiert, das bei einer synchronen Datenübertragung den Wert Null und bei einer asynchronen Datenübertragung einen von Null verschiedenen Wert annimmt. Der Übertragungsstatus wird innerhalb der Datennachrichten oder gesondert hiervon über den Datenbus 104 an die Steuerungseinrichtung 102 übertragen. In Abhängigkeit von dem Status können dann beispielsweise Prozesse in der Steuerungseinrichtung 102 angepasst werden, wenn eine asynchrone Datenübertragung erfolgt. Hierdurch kann ein in der Steuerungseinrichtung 102 ausgeführter Steuer- und/oder Regelalgorithmus so angepasst werden, dass Fehlansteuerungen des Aktors 110 vermieden werden, die aufgrund von Beeinträchtigungen bei der Übertragung der Messdaten hervorgerufen werden können.

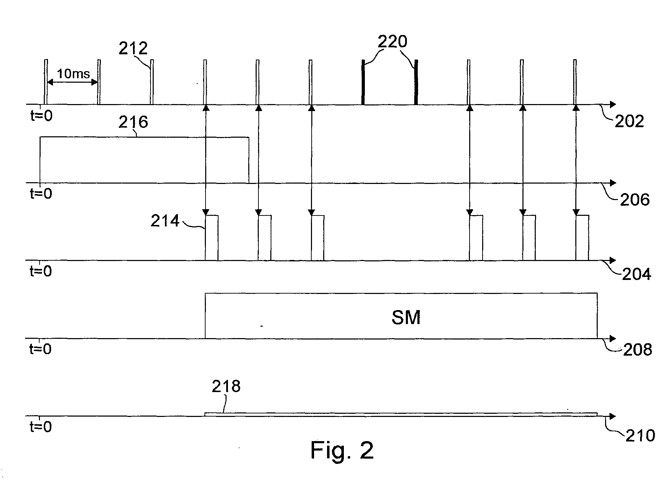

Die Datenübertragung in den beschriebenen Direktiven ist an einigen schematischen Beispielen in den Figuren 2 bis 7 anhand von Diagrammen veranschaulicht. Die Diagramme enthalten eine Zeitachse 202, welche den Empfang von Synchronisierungsbotschaften 212 in der Sensoreinrichtung 106 veranschaulicht, und eine Zeitachse 204, die das Absenden von Datennachrichten 214 durch die Sensoreinrichtung 106 veranschaulicht. Eine weitere Zeitachse 206 veranschaulicht das Zeitfenster 216, welches nach dem Zündungsstart und der Initialisierung des Datenbusses 104 in dem Zeitpunkt t = 0 initialisiert wird. Zudem enthalten die Diagramme eine Zeitachse 208, an der veranschaulicht wird, ob die Datenübertragung im Synchronmodus (SM) oder in einem Asynchronmodus (AM) erfolgt, sowie eine Zeitachse 210, die den Wert des von der Sensoreinrichtung 106 ausgegebenem Übertragungsstatus Fehlersignals 218 anzeigt.

Im Folgenden wird davon ausgegangen, dass der vorgegebene erste Bereich Zeitabstände zwischen 4 ms und 25 ms umfasst, und die Mindestanzahl von Synchronisierungsbotschaften vier beträgt.

In Figur 2 ist eine Situation dargestellt, in der die Synchronisierungsbotschaften 212 in Zeitabständen von 10 ms in der Sensoreinrichtung 106 empfangen werden. Bei einer Loopzeit von 10 ms ist dies beispielsweise der Fall, wenn die Synchronisierungsbotschaften 212 ohne Jittereffekte über den Datenbus 104 übermittelt werden können. Die Zeitabstände von 10 ms liegen in dem vorgegebenen ersten Bereich. Daher wird beim Empfang der vierten Synchronisierungsbotschaft 212 die Direktive 1 initialisiert und die Sensoreinrichtung 106 antwortet beginnend bei der vierten Synchronisierungsbotschaft 212 synchron mit dem Senden von Datennachrichten 214 auf die Synchronisierungsbotschaften 212. Wie in Figur 2 ersichtlich ist, sendet die Sensoreinrichtung 106 dabei im Wesentlichen unmittelbar nach dem Empfang einer Synchronisierungsbotschaft 212 eine Datennachricht 214 an die Steuerungseinrichtung 102.

Ferner sind in Figur 2 beispielhaft zwei Synchronisierungsnachrichten 220 dargestellt, die nicht fehlerfrei in der Sensoreinreinrichtung 106 empfangen werden. Wie in der Figur 2 ersichtlich, bleibt die Sensoreinrichtung 106 auch bei Wegfall der Synchronisierungsbotschaften 220 im Synchronmodus, so dass sie auf die nächste fehlerfrei empfangene Synchronisierungsbotschaft 212 bereits wieder synchron mit einer Datennachricht antwortet.

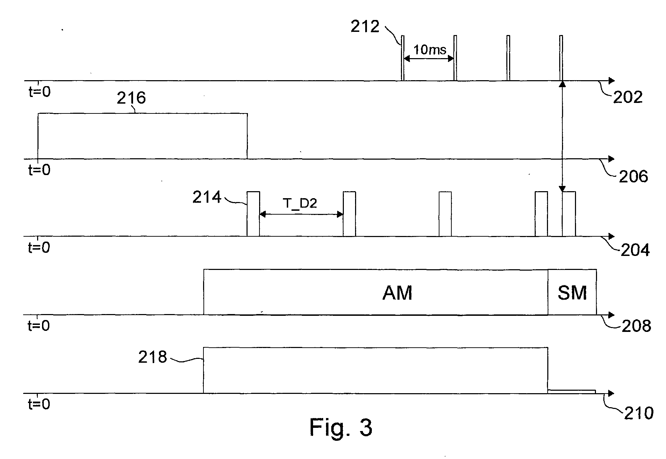

Beispiele für eine Datenübertragung in der Direktive 2 sind in den Figuren 3 bis 5 angegeben und werden im Folgenden erläutert.

Figur 3 bezieht sich auf eine Situation, in der nach dem Zündungsneustart und der Initialisierung des Datenbusses 104 keine Synchronisierungsbotschaften 212 in der Sensoreinrichtung 106 empfangen werden. Daher wird am Ende des beim Zündungsstart initialisierten Zeitfensters 216 die Direktive 2 initialisiert und Datennachrichten 214 werden im Asynchronmodus (AM) in einem festen zeitlichen Abstand T_D2 an die Steuerungseinrichtung 102 gesendet. Hierdurch wird sichergestellt, dass auch dann Messdaten in der Steuerungseinrichtung 102 vorliegen, wenn das Übermitteln von Synchronisierungsbotschaften 212 fehlschlägt. Der über die Zeitachse 210 veranschaulichte Status 218 hat einen von Null verschiedenen Wert, während die Direktive 2 initialisiert ist, um der Steuerungseinrichtung 102 den vorliegenden Synchronisierungsfehler zu signalisieren.

Eine Synchronisierung erfolgt in der dargestellten Situation zu einem späteren Zeitpunkt, nachdem die Sensoreinrichtung 106 vier Synchronisierungsbotschaften 212 in einem festen zeitlichen Abstand von 10 ms empfangen hat. Beim Empfang der vierten Synchronisierungsbotschaft 212 wird somit die Direktive 1 initialisiert, und die Datenübertragung erfolgt im Synchronmodus (SM). Der Übertragungsstatus 218 nimmt dann den Wert Null an.

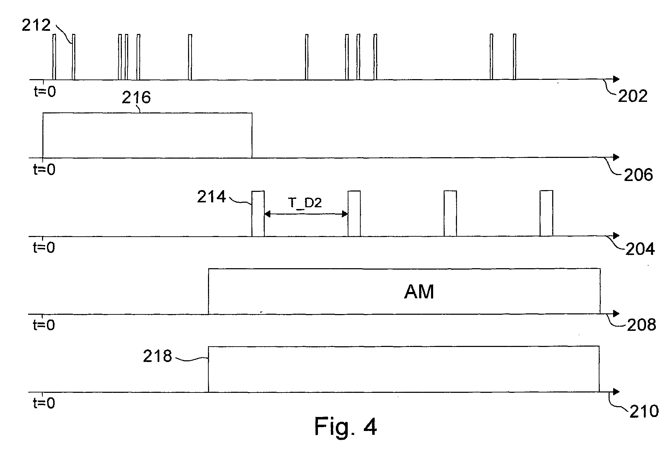

Bei der in Figur 4 dargestellten Situation werden die Synchronisierungsbotschaften 212 der Steuerungseinrichtung 102 in unregelmäßigen zeitlichen Abständen in der Sensoreinrichtung 106 empfangen und weisen kein zeitliches Muster auf, bei dem die Zeitabstände zwischen einer Mindestanzahl aufeinanderfolgender Synchronisierungsbotschaften in dem für die Initialisierung der Direktive 1 vorgesehenen Bereich oder in dem zur Initialisierung der Direktive 3 vorgesehenen Bereich liegen, so dass die Direktiven 1 und 3 nicht innerhalb des dargestellten Zeitfensters 216 initialisiert werden können. In diesem Fall wird am Ende des dargestellten, beim Zündungsstart initialisierten Zeitfensters 216 die Direktive 2 initialisiert und Datennachrichten 214 werden in einem Asynchronmodus (AM) in festen zeitlichen Abständen T_D2 an die Steuerungseinrichtung 102 gesendet. Hierdurch wird sichergestellt, dass auch dann Messdaten in der Steuerungseinrichtung 102 vorliegen, wenn das Übermitteln von Synchronisierungsbotschaften 212 fehlschlägt. Das über der Zeitachse 210 veranschaulichte Fehlersignal 218 hat einen von Null verschiedenen Wert, um der Steuerungseinrichtung 102 den vorliegenden Synchronisierungsfehler zu signalisieren.

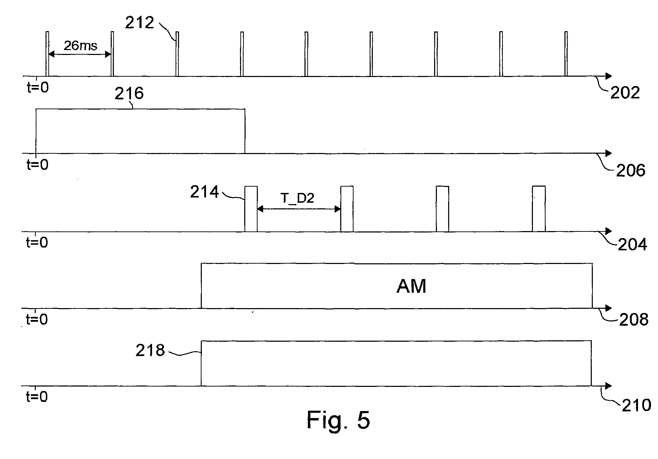

In Figur 5 ist eine Situation dargestellt, in der Synchronisierungsbotschaften 212 in regelmäßigen Zeitabständen von 26 ms in der Sensoreinrichtung 106 empfangen werden. Dieser Zeitabstand ist jedoch größer als die Obergrenze des vorgegebenen ersten Bereichs, die hier beispielsweise 25 ms beträgt. Daher wird am Ende des dargestellten, beim Zündungsneustart initialisierten Zeitfensters 216 die Direktive 2 initialisiert und die Datenübertragung erfolgt in einem Asynchronmodus (AM), wobei die Datennachrichten 214 in festen Zeitabständen T_D2 an die Steuerungseinrichtung 102 übermittelt werden. Der Übertragungsstatus 218 nimmt dabei einen von Null verschiedenen Wert an, um den Synchronisierungsfehler zu signalisieren.

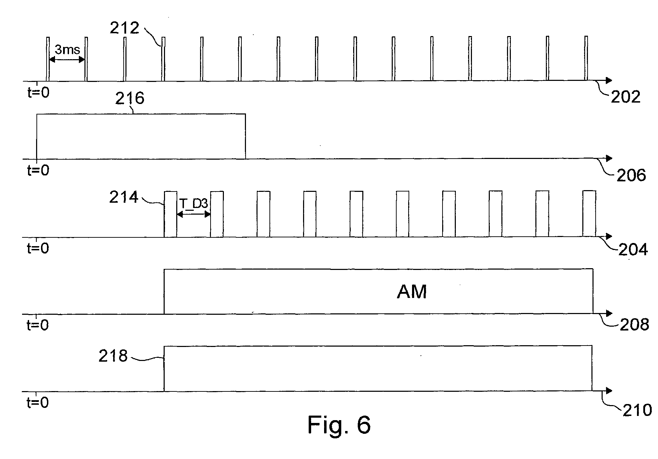

Figur 6 betrifft eine Situation, in der die Synchronisierungsbotschaften 212 in Zeitabständen von 3 ms in der Sensoreinrichtung 106 empfangen. Dieser Zeitabstand ist kleiner als die Untergrenze des vorgegebenen ersten Bereichs, so dass beim Empfang der vierten Synchronisierungsbotschaft 212 die Direktive 3 initialisiert wird. Somit erfolgt die Datenübertragung in einem Asynchronmodus (AM), wobei die Datennachrichten 214 in festen Zeitabständen T_D3 von der Sensoreinrichtung 106 an die Steuerungseinrichtung 102 gesendet werden. Der Übertragungsstatus 218 nimmt hier gleichfalls einen von Null verschiedenen Wert an, um der Steuerungseinrichtung 102 den vorliegenden Synchronisierungsfehler zu signalisieren.

Das im Rahmen der Erfindung vorgeschlagene und zuvor beispielhaft erläuterte Synchronisierungskonzept eignet sich besonders, wenn in der Steuerungseinrichtung 102 sicherheitskritische Echtzeitanwendungen ausgeführt werden, bei denen mittels der Sensoreinrichtung 106 erfasste Messdaten herangezogen werden. Ein Beispiel für eine derartige sicherheitskritische Echtzeitanwendung ist eine Fahrdynamikregelung, insbesondere eine dem Fachmann an sich bekannte ESP-Regelung (ESP: Elektronisches Stabilitätsprogramm), die einen Anwendungsfall der vorliegenden Erfindung darstellt. In diesem Anwendungsfall ist die Sensoreinrichtung 106 beispielsweise als ein Sensorcluster ausgeführt, das Sensoren zur Erfassung von Fahrzustandsgrößen umfasst. Hierbei beherbergt das Sensorcluster zumindest einen Querbeschleunigungssensor und einen Gierratensensor. Gleichfalls können auch ein Längsbeschleunigungssensor und/oder weitere Drehratensensoren und/oder ein oder mehrere Drehbeschleunigungssensoren in dem Sensorcluster enthalten sein. In der Steuerungseinrichtung 102 wird ein Steuer- und/oder Regelalgorithmus zur Durchführung der Fahrdynamikregelung ausgeführt, in dem die von dem Sensorcluster übermittelten Messdaten herangezogen werden, um die aktuelle Fahrsituation des Fahrzeugs zu bewerten und in kritischen Fahrsituation Steuer- und Regeleingriffe zur Stabilisierung des Fahrzeugs vorzunehmen. Die zur Durchführung der Steuer- und Regeleingriffe genutzten Aktoren 110 sind im Falle einer derartigen Fahrdynamikregel beispielsweise ein Bremsenaktor, mit dem fahrerunabhängig radindividuelle Bremskräfte an den Rädern des Fahrzeugs eingestellt werden können, und gegebenenfalls ein Lenkungsaktor, mit dem der Radeinschlagswinkel der lenkbaren Räder des Fahrzeugs fahrerunabhängig eingestellt werden kann. Darüber hinaus kann es vorgesehen sein, dass mittels des Steuergeräts auch ein Antriebsmotor des Fahrzeugs angesteuert wird, um den Fahrzustand des Fahrzeugs zu stabilisieren.

Die Anwendung der Erfindung und ihrer Ausführungsformen ist jedoch keineswegs auf Fahrdynamikregelungen beschränkt. Vielmehr kann das vorgeschlagene Synchronisierungskonzept auch bei anderen Anwendungen, insbesondere bei sicherheitskritischen Echtzeitanwendungen, eingesetzt werden. Beispiele für andere derartige Anwendungen sind etwa adaptive Geschwindigkeitsregelungen, welche die Geschwindigkeit des Fahrzeugs in Abhängigkeit von einem Abstand des Kraftfahrzeugs zu Objekten im Umfeld des Kraftfahrzeugs anpassen, oder dem Fachmann an sich bekannte Sicherheitssysteme, welche bei einer drohenden Kollision zwischen dem Fahrzeug und einem Objekt im Umfeld des Fahrzeugs aktive und/oder passive Sicherheitsmittel des Fahrzeugs ansteuern. In den beiden letztgenannten Anwendungen werden Sensoreinrichtungen 106 verwendet, die Umfeldsensoren zur Erfassung von im Umfeld des Fahrzeugs befindlichen Objekten enthalten, und anhand des vorgeschlagenen Synchronisierungskonzepts mit einer Steuerungseinrichtung 102 zur Ausführung der genannten Funktionen synchronisiert werden können.

## Patentansprüche

1. Verfahren zum Übertragen von Messdaten von einer Sensoreinrichtung (106) an eine Steuerungseinrichtung (102), wobei von der Steuerungseinrichtung (102) gesendete Synchronisierungsbotschaften (212) in der Sensoreinrichtung (106) empfangen werden können und die Sensoreinrichtung (106) aufgrund des Empfangs von Synchronisierungsbotschaften (212) in einen Synchronmodus (SM) versetzt wird, in dem die Sensoreinrichtung (106) die Messdaten umfassende Datennachrichten (214) synchron zum Empfang der Synchronisierungsbotschaften (212) an die Steuerungseinrichtung (102) sendet,
wobei es
geprüft wird, in welchen Zeitabständen, von der Steuerungseinrichtung (102) gesendete Synchronisierungsbotschaften (212) in der Sensoreinrichtung (106) empfangen werden, und die Sensoreinrichtung (106) in den Synchronmodus (SM) versetzt wird, wenn die Überprüfung ergibt, dass von der Steuerungseinrichtung (102) gesendete Synchronisierungsbotschaften (212) entsprechend einem ersten zeitlichen Muster empfangen werden und wobei die Sensoreinrichtung (106) in einen Asynchronmodus (AM) versetzt wird, wenn die Prüfung ergibt, dass die Synchronisierungsbotschaften (212) nicht entsprechend des ersten zeitlichen Musters in der Sensoreinrichtung (106) empfangen werden, wobei die Sensoreinrichtung (106) im Asynchronmodus (AM) die Messdaten umfassende Datennachrichten (214) mit einer vorgegebenen Frequenz an die Steuerungseinrichtung (102) sendet.

2. Verfahren nach Anspruch 1,
**dadurch gekennzeichnet,**
**dass** das erste zeitliche Muster eine Mindestanzahl von aufeinanderfolgenden Synchronisierungsbotschaften (212) umfasst, welche in Zeitabständen empfangen werden, die jeweils innerhalb eines vorgegebenen ersten Bereichs liegen.

3. Verfahren nach einem der vorangegangenen Ansprüche,
**dadurch gekenntzeichnet,**
dass die Sensoreinrichtung in einen ersten Asynchronmodus versetzt wird, wenn die Prüfung ergibt, dass die von der Steuerungseinrichtung (102) gesendeten Synchronisierungsbotschaften (212) entsprechend eines zweiten zeitlichen Musters in der Sensoreinrichtung (106) empfangen werden, wobei die Messdaten umfassende Datennachrichten in dem ersten
Asynchronmodus mit einer ersten Frequenz an die Steuerungseinrichtung (102) gesendet werden.

4. Verfahren nach Anspruch 3,
**dadurch gekennzeichnet,**
**dass** das zweite zeitliche Muster eine Mindestanzahl von aufeinanderfolgenden Synchronisierungsbotschaften (212) umfasst, welche in Zeitabständen empfangen werden, die jeweils innerhalb eines vorgegebenen zweiten Bereichs liegen, wobei der zweite Bereich kleinere Zeitabstände umfasst als der erste Bereich.

5. Verfahren nach Anspruch 3 oder 4,
**dadurch gekennzeichnet,**
**dass** die Sensoreinrichtung (106) in einen zweiten Asynchronmodus versetzt wird, wenn die Prüfung ergibt, dass die Synchronisierungsbotschaften (212) nicht entsprechend einem vorgegebenen zeitlichen Muster, insbesondere nicht entsprechend dem ersten oder zweiten vorgegebenen Muster, in der Sensoreinrichtung (106) empfangen werden, wobei die Messdaten umfassende Datennachrichten (214) in dem zweiten Asynchronmodus mit einer zweiten Frequenz an die Steuerungseinrichtung (102) gesendet werden.

6. Verfahren einem der vorangegangenen Ansprüche,
**dadurch gekennzeichnet,**
**dass** für die Prüfung, wann, insbesondere in welchen Zeitabständen, die von der Steuerungseinrichtung (102) gesendeten Synchronisierungsbotschaften (212) in der Sensoreinrichtung (106) empfangen werden, ein Zeitfenster vorgegeben wird.

7. Verfahren nach Anspruch 6,
**dadurch gekennzeichnet,**
**dass** das Zeitfenster bei jedem Empfang einer Synchronisierungsbotschaft (212) in der Sensoreinrichtung (106) neu initialisiert wird, wenn sich die Sensoreinrichtung (106) im Synchronmodus (SM) oder Asynchronmodus befindet.

8. Verfahren nach einem der vorangegangenen Ansprüche,
**dadurch gekennzeichnet,**
**dass** die Prüfung, wann, insbesondere in welchen Zeitabständen, von der Steuerungseinrichtung (102) gesendete Synchronisierungsbotschaften (212) in der Sensoreinrichtung (106) empfangen werden, anhand eines Zeitstempelmessverfahrens erfolgt.

9. Verfahren nach einem der vorangegangenen Ansprüche,
**dadurch gekennzeichnet,**
**dass** die Sensoreinrichtung (106) und die Steuerungseinrichtung (102)
über einen Datenbus miteinander verbunden sind.

10. Verfahren nach einem der vorangegangenen Ansprüche,
**dadurch gekennzeichnet,**
**dass** es sich bei der Sensoreinrichtung (106) um ein Sensorcluster in einem Kraftfahrzeug handelt, das wenigstens einen Längsbeschleunigungssensor, insbesondere einen Querbeschleunigungssensor, und/oder wenigstens einen Drehratensensor, insbesondere einen Gierratensensor, aufweist.

11. Verfahren nach einem der vorangegangenen Ansprüche,
**dadurch gekennzeichnet,**
**dass** es sich bei der Steuerungseinrichtung (102) um eine Steuerungseinrichtung eines Kraftfahrzeugs zur Durchführung einer Fahrdynamikregelung handelt.

## Claims

1. Method for transmitting measured data from a sensor device (106) to a control device (102), wherein synchronization messages (212) sent by the control device (102) can be received in the sensor device (106) and, on the basis of the reception of synchronization messages (212), the sensor device (106) is put into a synchronous mode (SM) in which the sensor device (106) sends data messages (214) comprising the measured data to the control device (102) in sync with the reception of the synchronization messages (212), wherein a check is performed to determine at what intervals of time synchronization messages (212) sent by the control device (102) are received in the sensor device (106), and the sensor device (106) is put into the synchronous mode (SM) if the result of the check is that synchronization messages (212) sent by the control device (102) are received in line with a first time pattern and wherein the sensor device (106) is put into an asynchronous mode (AM) if the result of the check is that the synchronization messages (212) are not received in the sensor device (106) in line with the first time pattern, wherein in the asynchronous mode (AM) the sensor device (106) sends data messages (214) comprising the measured data to the control device (102) at a prescribed frequency.

2. Method according to Claim 1,
**characterized**
**in that** the first time pattern comprises a minimum number of successive synchronization messages (212) which are received at intervals of time which are respectively within a prescribed first range.

3. Method according to one of the preceding claims,
**characterized**
**in that** the sensor device is put into a first asynchronous mode if the result of the check is that the synchronization messages (212) sent by the control device (102) are received in the sensor device (106) in line with a second time pattern, wherein in the first asynchronous mode data messages comprising the measured data are sent to the control device (102) at a first frequency.

4. Method according to Claim 3,
**characterized**
**in that** the second time pattern comprises a minimum number of successive synchronization messages (212) which are received at intervals of time which are respectively within a prescribed second range, the second range comprising shorter intervals of time than the first range.

5. Method according to Claim 3 or 4,
**characterized**
**in that** the sensor device (106) is put into a second asynchronous mode if the result of the check is that the synchronization messages (212) are not received in the sensor device (106) in line with a prescribed time pattern, particularly not in line with the first or second prescribed pattern, wherein in the second asynchronous mode data messages (214) comprising the measured data are sent to the control device (102) at a second frequency.

6. Method according to one of the preceding claims,
**characterized**
**in that** a time window is prescribed for the check to determine when, particularly at what intervals of time, the synchronization messages (212) sent by the control device (102) are received in the sensor device (106).

7. Method according to Claim 6,
**characterized**
**in that** whenever a synchronization message (212) is received in the sensor device (106) the time window is reinitialized if the sensor device (106) is in the synchronous mode (SM) or asynchronous mode.

8. Method according to one of the preceding claims,
**characterized**
**in that** the check to determine when, particularly at what intervals of time, synchronization messages (212) sent by the control device (102) are received in the sensor device (106) is effected using a timestamp measurement method.

9. Method according to one of the preceding claims,
**characterized**
**in that** the sensor device (106) and the control device (102) are connected to one another by means of a data bus.

10. Method according to one of the preceding claims,
**characterized**
**in that** the sensor device (106) is a sensor cluster in a motor vehicle which has at least one longitudinal acceleration sensor, particularly a lateral acceleration sensor, and/or at least one rotation rate sensor, particularly a yaw rate sensor.

11. Method according to one of the preceding claims,
**characterized**
**in that** the control device (102) is a control device in a motor vehicle for performing driving dynamics control.

## Revendications

1. Procédé de transfert de données de mesure d'un dispositif de détection (106) à un dispositif de commande (102), dans lequel
des messages de synchronisation (212) envoyés par le dispositif de commande (102) peuvent être reçus dans le dispositif de détection (106) et sur la base de la réception de messages de synchronisation (212), le dispositif de détection (106) est placé dans un mode synchrone (SM) dans lequel le dispositif de détection (106) envoie les messages de données (214) qui contiennent les données de mesure au dispositif de commande (102) de manière synchronisée par rapport à la réception des messages de synchronisation (212) et
dans lequel les intervalles de temps auxquels les messages de synchronisation (212) envoyés par le dispositif de commande (102) sont reçus dans le dispositif de détection (106) sont vérifiés,
le dispositif de détection (106) étant placé en mode synchrone (SM) lorsque la vérification indique que les messages de synchronisation (212) envoyés par le dispositif de commande (102) sont reçus en correspondance à un premier motif temporel,
le dispositif de détection (106) étant placé en un mode asynchrone (AM) lorsque la vérification indique que les messages de synchronisation (212) n'ont pas été reçus dans le dispositif de détection (106) en correspondance au premier motif temporel,
le dispositif de détection (106) envoyant en mode asynchrone (AM) les messages de données (214) contenant les données de mesure à une fréquence prédéterminée au dispositif de commande (102).

2. Procédé selon la revendication 1, **caractérisé en ce que** le premier motif temporel comporte un nombre minimum de messages de synchronisation (212) successifs qui sont reçus à des intervalles de temps qui sont tous situés à l'intérieur d'une première plage prédéterminée.

3. Procédé selon l'une des revendications précédentes, **caractérisé en ce que** le dispositif de détection est placé dans un premier mode asynchrone lorsque la vérification indique que les messages de synchronisation (212) envoyés par le dispositif de commande (102) ont été reçus dans le dispositif de détection (106) en correspondance à un deuxième motif temporel, les messages de données contenant les données de mesure étant envoyés au dispositif de commande (102) à une première fréquence dans le premier mode asynchrone.

4. Procédé selon la revendication 3, **caractérisé en ce que** le deuxième motif temporel comporte un nombre minimum de messages de synchronisation (212) successifs reçus à des intervalles de temps qui sont aussi situés à l'intérieur d'une deuxième plage prédéterminée, la deuxième plage contenant des intervalles temporels plus petits que la première plage.

5. Procédé selon les revendications 3 ou 4, **caractérisé en ce que** le dispositif de détection (106) est placé en un deuxième mode asynchrone lorsque la vérification indique que les messages de synchronisation (212) n'ont pas été reçus dans le dispositif de détection (106) en correspondance à un motif temporel prédéterminé et en particulier en correspondance au premier ou au deuxième motif prédéterminé, les messages de données (214) contenant les données de mesure étant envoyés au dispositif de commande (102) à une deuxième fréquence dans le deuxième mode asynchrone.

6. Procédé selon l'une des revendications précédentes, **caractérisé en ce qu'**une fenêtre temporelle est prédéterminée pour la vérification des instants et en particulier des intervalles de temps auxquels les messages de synchronisation (212) envoyés par le dispositif de commande (102) ont été reçus dans le dispositif de détection (106).

7. Procédé selon la revendication 6, **caractérisé en ce que** lors de chaque réception d'un message de synchronisation (212) dans le dispositif de détection (106), la fenêtre temporelle est réinitialisée si le dispositif de détection (106) se trouve en mode synchrone (SM) ou en mode asynchrone.

8. Procédé selon l'une des revendications précédentes, **caractérisé en ce que** la vérification des instants et en particulier des intervalles de temps auxquels les messages de synchronisation (212) envoyés par le dispositif de commande (102) ont été reçus dans le dispositif de détection (106) s'effectuent à l'aide d'un procédé de mesure d'un marqueur temporel.

9. Procédé selon l'une des revendications précédentes, **caractérisé en ce que** le dispositif de détection (106) et le dispositif de commande (102) sont reliés l'un à l'autre par un bus de données.

10. Procédé selon l'une des revendications précédentes, **caractérisé en ce que** le dispositif de détection (106) est un ensemble de détecteurs d'un véhicule automobile qui présente au moins un détecteur d'accélération longitudinale, en particulier un détecteur d'accélération transversale et/ou au moins un détecteur de vitesse de rotation, en particulier un détecteur de vitesse de lacet.

11. Procédé selon l'une des revendications précédentes, **caractérisé en ce que** le dispositif de commande (102) est un dispositif de commande d'un véhicule automobile destiné à exécuter une régulation de la dynamique de roulage.
